(19) Europäisches Patentamt
European Patent Office
Office européen des brevets

(11) Publication number: **0 178 754**
**B1**

(12) # EUROPEAN PATENT SPECIFICATION

(45) Date of publication of patent specification: **21.09.88**

(51) Int. Cl.$^4$: **F 02 K 9/60,** F 02 K 9/34, F 02 K 9/72, F 02 K 7/18

(21) Application number: **85305427.8**

(22) Date of filing: **30.07.85**

(54) **Single stage autophage rocket.**

(30) Priority: **15.10.84 US 660668**

(43) Date of publication of application:
**23.04.86 Bulletin 86/17**

(45) Publication of the grant of the patent:
**21.09.88 Bulletin 88/38**

(84) Designated Contracting States:
**DE FR GB SE**

(56) References cited:
**FR-A-1 298 388**
**FR-A-2 296 101**
**US-A-3 067 575**
**US-A-3 127 739**
**US-A-3 250 216**
**US-A-4 063 415**

**PRODUCT ENGINEERING, vol. 41, no. 9, 27th April 1970, pages 18,19, US; "Hybrid air-gulping rocket enters its final design phase"**

(73) Proprietor: **GRUMMAN AEROSPACE CORPORATION**
**South Oyster Bay Road**
**Bethpage, NY 11714 (US)**

(72) Inventor: **Corbett, Marshall J.**
**15 Elberta Drive**
**E. Northport New York 11731 (US)**
Inventor: **Belisle, Joseph A.**
**3 Guildford Park Drive**
**West Babylon New York 11704 (US)**

(74) Representative: **Andrews, Robert Leonard et al**
**HASELTINE LAKE & Co. Hazlitt House, 28**
**Southampton Buildings Chancery Lane**
**London WC2A 1AT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 178 754 B1

**Description**

The present invention relates to an autophage rocket, i.e. a rocket of which the rocket casing becomes consumed during flight, thereby decreasing the rocket weight.

U.S. Patent No. 3,127,739 (Miller) discloses (see Figure 1) a solid propellant autophage rocket, the casing (20) of which comprises concentric inner and outer wall members (22 and 24) with a solid propellant material (26) filling the space between them to ensure that the casing burns. Figure 1a and the related description show that each wall member, 20 or 24, preferably itself consists of two concentric walls (28 and 30), each of double thickness and made of "a fast burning metal foil or plastic laminate", with more solid propellant (32) between the walls (28 and 30). The great disadvantage of the Miller device is the utilization of a casing having these concentric wall parts which adds greatly to the inert weight of the rocket.

U.S. Patent No. 3,067,575 (Corbett) discloses an autophage rocket comprising a gelatinous fuel in a single-wall casing which is stated to be preferably of magnesium or aluminum, although the use of other metals and of "a plastic material" (not further particularised) is stated to be a possibility. Since a metallic material will conduct heat away from the area where the casing is consumed, it is possible that other areas of the casing will begin burning in an uncontrollable manner thereby destroying the rocket motor. It is apparently considered essential, and it is specified in claim 1 of the Corbett patent, that the combustion chamber, in which the fuel is burned, has connected to it a nozzle to receive the exhaust gas generated from the gelatinous fuel and this nozzle can slide within the casing. Figure 2 and the related description disclose that when a little more than half of the fuel has been used the nozzle is wholly within what is left of the casing, that is to say there is a substantial length of the casing still remaining rearward of the zone where combustion of the fuel occurs and gases produced by combustion of the casing rearward of the nozzle cannot pass through the nozzle.

According to the present invention, there is provided an autophage rocket including a single-wall rocket casing for storing fuel and fabricated from a combustible material, rocket motor means having inlet means for receiving the fuel, the rocket motor means generating rocket thrust during combustion of the fuel and having exhaust port means, means located within the casing for sliding the aft end of the casing over the exhaust port means at a rate corresponding to the fuel consumption and expansion nozzle means located rearwardly of the exhaust port means for directing exhaust from the fuel, characterised in that the single-wall rocket casing consists of a relatively lightweight non-metallic and heat-insulating combustible material which is combusted adjacent the exhaust port means, as a consequence of the heat generated in the rocket motor means, so that during flight of the rocket no part of the casing remains rearwardly of the exhaust port means and exhaust from the combustion of the casing passes through the expansion nozzle means and contributes to the thrust developed by the rocket.

With the use of the non-metallic and heat-insulating material, which preferably consists primarily of KEVLAR—epoxy and preferably, whether or not it includes KEVLAR—expoxy, includes a powdered oxidizer, in a construction according to the invention the burning of the casing occurs at the rocket exhaust ports and not forward of them. Also the passing through the expansion nozzle means of exhaust gases from the combustion of the casing makes a useful contribution to the total thrust produced.

The maximum external width of the expansion nozzle means is preferably greater than the internal width of the casing, in contrast to the arrangement disclosed by Corbett.

The rocket motor means of a rocket according to the present invention is preferably a plurality of rocket motors between which there are spaces for permitting the insertion of struts between the motors which are required to carry the expansion nozzle means. The struts further provide a convenient place for mounting vanes which permit steering and stabilization of the vehicle or some other means for providing attitude control of the rocket when in flight.

The aft section of the casing may have a dome-shaped member transversely oriented with respect to the axis of the casing and the struts may serve to support the expansion nozzle means on the dome-shaped member. The rocket motors may be individually controlled. The rocket motor means may have outlet gas nozzles which are skewed thereby causing the rocket to exhibit controlled spin during flight.

Examples in accordance with the invention are described below with reference to the accompanying drawings, in which:—

Fig. 1 is a diagrammatic cross-sectional view illustrating the basic internal components of an autophage rocket, in accordance with the present invention;

Fig. 2 is a bi-directional diagrammatic sectional view taken along a plane passing through section line 2—2 of Fig. 1;

Fig. 3 is a diagrammatic sectional view of an autophage rocket utilized as a booster for a manned space vehicle;

Fig. 4 is a detailed diagrammatic view of the aft end of the autophage rocket in accordance with the present invention;

Fig. 5 is a diagrammatic perspective view of the present invention utilizing skewed nozzles to achieve vehicle spin;

Fig. 6 is a plot of maximum vehicle velocity as a function of mass ratio;

Fig. 7 is a plot of maximum vehicle velocity as a function of effective exhaust velocity.

It is a primary contention of the inventors that better use can be made of the rather low specific

impulse ($I_{sp}$) of today's storable monopropellant rocket fuels, if specific attention is paid to the mass fraction of a launch vehicle system. The plots of Figs. 6 and 7 illustrate the interrelationship between effective rocket exhaust velocity (which can be equated to $I_{sp}$), the mass fraction or ratio (ε) and desired orbital velocity which, for example, may nominally be 8,200 m/second (25,000 ft./second) referenced to zero Earth surface velocity. The plots demonstrate that, if it is possible to achieve a mass fraction of 95% (i.e. 95% fuel weight relative to 100% launch pad weight), then one can achieve orbital velocity in a single-stage vehicle with a single propulsion system as opposed to a multiple propulsion system. This would be so even if the $I_{sp}$ is as low as 220 seconds which is typical of monopropellants. However, this is not possible without consuming a large part of the tank or casings weight during the ascent phase and having the consumption of this tank weight become a significant addition to the thrust of the system. In the prior art previously explored, the rocket casing is consumed but, due to the utilization of a metallic wall, objectionable dead weight must be overcome at the outset of flight.

Fig. 1 schematically illustrates a cross-sectional view of a rocket employing an improved autophage system. As the outer casing 12 of rocket 10 is "pulled down" over a nest of four rocket motors 24, 26 and 28, 30 (Fig. 2), the tubular casing 12 forming the rocket tank is consumed by and at the rocket motor exhausts. Thus, the amount of mass being accelerated by the rocket is continuously decreasing and at burnout the forward dome portion 16 of the casing will be positioned in overlying relation with the rear dome portion 18. Of course, the higher the fineness ratio of the tubular tank (length divided by diameter), more of the casing is consumed at the exhausts thereby increasing the final mass fraction.

A central tube 20 having a rack gear machined therein draws down dome portion 16 into confronting proximity with dome portion 18. The rate of this "draw down" depends upon the consumption of liquid fuel 14 within the storage volume of casing 12. In order to seal the propellent within casing 12, O-ring seals 19 and 21 each respectively form a fluid seal with the dome portion 18.

Fig. 4 illustrates in greater detail the components located in the aft end of the rocket. Outwardly of the exhaust end of each motor is a space 35 where combustion of the tubular casing end occurs as the casing is "drawn down". As will be clearly shown in Fig. 4, gear teeth 23 are machined into the surface of the central tube 20 and are engaged by pin gear 22 which displaces central tube 20 from left to right, as viewed in Fig. 4. The sealing characteristics of the drive are increased by preferably having a plastic (polymer) coating over the central tube such that it can be drawn through seal 21 smoothly.

A high internal pressure in the monopropellant tank, typically 21.09 kp/cm$^2$ (=300 psi) is treated without the use of gas pressure, and a controllable feed rate is established, such that rate of feed of the tubular portion of the tank exactly matches the rate at which that portion of the tank is being consumed at the rocket exhausts. Additional impulse for the rocket is gained by channelling the exhaust from the burned casing through an annular expansion nozzle 36 which is supported by four perpendicularly oriented struts 32, 34, 36 and 40 as shown in Fig. 2. Thus, the annular nozzle supported by the struts directs the thrust developed by consumption of fuel and casing into the main body of rocket 10. Attitude control vanes such as 42 and 44 may be connected to the aft edge of each strut in order to control the position of the rocket in flight.

By carefully considering Figs. 2 and 4, it will be noted that the design of the present invention involves the ram-rocket principle when the vehicle is operated within the sensible atmosphere, up to 26,250 m (80,000) feet altitude, and, therefore, a ram inlet 58 is provided at the forward end of the circumferential expansion nozzle 36. The inclusion of a ram-rocket structure and an expansion nozzle to expand the products of casing combustion provides additional impulse which is highly desirable.

By utilizing a single propellant fuel system, disadvantages of bipropellant fuel systems are avoided since the latter unnecessarily complicates the number of tanks, feed pipes, and seals leading to a larger fixed (metallic) weight, thus reducing the mass fraction, although the $I_{sp}$ may be higher.

Fig. 3 illustrates a typical utilization of the present autophage rocket as a booster. As is indicated in the figure, a manned space vehicle generally indicated by reference numeral 46 is connected at its rearward portion to the forward dome portion 16 of rocket 10. Toward the burnout period of flight, the two dome portions 16 and 18 of rocket 10 will confront each other in overlying relation and at that point the rocket 10 may be separated from the space vehicle 46 at junction 48. It is to be emphasized that the invention resides in the rocket construction and not the utilization of the rocket with a manned space vehicle. Unlike the metallic casing and components utilized in prior art autophage rockets, the present invention preferably utilizes composite materials wherever possible. It is extremely important that casing 12 be fabricated from a relatively lightweight and strong material which is itself combustible. In a preferred embodiment of the invention, KEVLAR-epoxy is utilized since it contains about 30% resin, which is quite combustible. A further advantage of this KEVLAR-epoxy material is that it does not conduct heat nearly as fast as metals do, so that the burning surface will be at the rocket exhausts, and not destructively forward of that point. The utilization of KEVLAR-epoxy in rocketry has been explored by the Hercules Powder Company, which has employed the material as a solid rocket case for the Space Shuttle Solid Rocket Booster. However, the present invention is an attempt to employ such a casing as a combustible, expendable rocket housing in accordance with the autophage principle.

An important consideration in the selection of casing material is to choose a material which has an intrinsic heat of combustion, which in combination with the proper monopropellant mixture ratio will actually add the casing's heat of reaction to the total energy of the system. If KEVLAR is employed, as the casing material, it is preferable to dissolve ammonium perchlorate ($NH_4ClO_4$) in an ethylene oxide monopropellant ($C_2H_4O$). Then there could be sufficient excess oxygen to "burn" the outer casing even outside the atmosphere. Hydrazine is an alternative acceptable fuel. While in the presence of the atmosphere, the aerodynamic expansion nozzle 36 forming a shroud around the four rocket motors 24, 26, 28 and 30 will provide sufficient oxygen to "burn" the outer casing 12, expand its exhaust products, and produce additional thrust, as in a ram-rocket.

Accordingly, in addition to the propellant, there all three additional sources of thrust which can reduce the mass fraction sensitivity of an autophage rocket. They are: (1) the addition of a miscible oxidizer in the monopropellant fuel so as to raise the fuel's $I_{sp}$; (2) the heat of combustion of the outer casing composite material can be augmented by including a small percentage of oxidizer in its epoxy binders' and (3) the additional impulse ($I_{sp}$) which can be obtained from the sensible oxygen in the atmosphere, up to 26250 metres (80,000 feet), as the rocket rises from sēa level to that attitude by relying upon the aerodyanamic expansion nozzle 36 and the ram-rocket principle.

Because the present rocket structure is consumable in flight, the parts must be fabricated at the least possible cost. For this reason, cryogenic propellants have not been considered, nor have storable bipropellants been considered. Rather, enriched storable monopropellants have been selected. The present design also avoids the expense of turbopumps and gas pressurization systems. A simple drive, such as the discussed rack and pinion "pull-down" drive forces the monopropellant into respective rocket engine exhausts in a satisfactory manner. In addition, the present design may avoid expensive gimbaled rocket nozzles. The present invention permits the utilization of simple vanes such as 42 and 44 (Fig. 4) in relatively cool monopropellant exhaust streams. By virtue of the present design, it is possible to exclude regenerative cooling of rocket components since high performance composites such as carbon-carbon composite may be employed.

Considering the rocket motors in detail (as shown in Fig. 4), each of the motors 24, 26, 28 and 30 includes a number of monopropellant spray nozzles 50, 54 and 56 which are preferably in the nature of burst diaphragm closures that inject monopropellant into the rocket motors. Catalyst bed such as 27 and 29 are located in each of the rocket motors and they are typically platinum coated for maximizing combustion efficiency for monopropellant fuel.

Since the present invention is a zero pressure storage system, it can be kept safely in space without danger of leakage. Therefore, it can be kept in space ready for operation for an extended period of time, dependent only upon the lifetime of the batteries 84 which are necessary for powering the winch motor 82 during successful operation of the rocket motor.

In continued consideration of Fig. 4, the control vanes such as 42 and 44, respectively connected to struts 32 and 34, may be removed in favor of installing a conventional micro-metering valve, such as 52, on each of the monopropellant spray nozzles 50, 54 and 56 because with a spinning missile the timing of side force application with spin rate is very critical. Controlling propellant injection is far less wasteful of chemical energy than the few degrees of lateral control which can be achieved with the control vanes. An additional design consideration may be the inclusion of a side exhaust port (not shown) adjacent to each of the motors 24, 26, 28 and 30 to obtain more lateral reaction forces on the vehicle than is possible with unequal flow through the expansion nozzle 36.

In the embodiment shown in Fig. 5, a separate dome 74 is installed within the casing of the illustrated rocket 60. The embodiment of Fig. 5 differs from that of Fig. 4 in that four skewed nozzles 62, 64, 68 and 70 are employed to spin the vehicle which enhances thrust vector control. The dome 74 is drawn down toward dome 72 by an illustrated conductor wire mounted on motor driven winch 86 within nose section 76. Thus, the means for drawing down the domes toward one another, as fuel is consumed, may take a number of forms. The winch motor 82 is powered by batteries 84, all of which are enclosed within the fore portion 80 of nose section 76.

When the rocket is to operate outside the atmosphere, the ram-rocket inlet 58 (Fig. 4) is closed as indicated by dotted lines over the lower inlet, in which case the outer casing 12 would continue to neatly slide into the exhausts of the four rocket motors when combustion of the casing occurs prior to final expansion through nozzle 36.

The preferable use of composite materials may be extended to other rocket parts. The central draw down tube 20 is preferably fabricated from a boron composite material with rack teeth machined into it and the aerodynamically shaped expansion nozzle 56 would preferably be fabricated from a carbon-carbon composite material.

Although the rocket casing of the present invention is essentially a single wall, the use of this term is not intended to exclude the case where a wall is made up of two or more layers. It is, however, intended to exclude the case where there is solid propellant or pyrotechnic material between the layers.

The word "KEVLAR" used in this description and the appended claims is intended to mean an aromatic polyamide (for example poly-p-phenyleneterephthalamide) fiber, irrespective of whether or not it is obtained from DuPont the proprietors of the trade mark "KEVLAR". Such material mixed with epoxy resin is referred to herein as "KEVLAR-epoxy".

**Claims**

1. An autophage rocket including a single-wall rocket casing (12) for storing fuel (14) and fabricated from a combustible material, rocket motor means (24, 26, 28, 30) having inlet means (50, 54, 56) for receiving the fuel, the rocket motor means generating rocket thrust during combustion of the fuel and having exhaust port means (90), means (23, 86) located within the casing (12) for sliding the aft end of the casing over the exhaust port means (90) at a rate corresponding to the fuel consumption and expansion nozzle means (36) located rearwardly of the exhaust port means (90) for directing exhaust from the fuel, characterised in that the single-wall rocket casing (12) consists of a relatively lightweight non-metallic and heat-insulating combustible material which is combusted adjacent the exhaust port means (90), as a consequence of the heat generated in the rocket motor means (24, 26, 28, 30), so that during flight of the rocket no part of the casing (12) remains rearwardly of the exhaust port means (90) and exhaust from the combustion of the casing (12) passes through the expansion nozzle means (36) and contributes to the thrust developed by the rocket.

2. A rocket according to claim 1, characterized in that the rocket casing (12) consists primarily of KEVLAR-epoxy.

3. A rocket according to claim 1 or 2, characterised in that the material of the casing (12) includes a powdered oxidizer which increases the specific impulse.

4. A rocket according to any preceding claims, characterised in that the aft section of the casing (12) had a dome-shaped member (18) transversely oriented with respect to the axis of the casing (12) and a plurality of strut means (32, 34, 38, 40) located between individual rocket motors of the rocket motor means (24, 26, 28, 30) for supporting the expansion nozzle means (36) on the dome-shaped member (18).

5. A rocket according to claim 4, characterised by means (42, 44) connected to the strut means (32, 34, 38, 40) for providing attitude control of the rocket when in flight.

6. A rocket according to claim 4 or 5, characterised in that the rocket motor means (24, 26, 28, 30) has outlet gas nozzles (62, 64, 68, 70) which are skewed thereby causing the rocket to exhibit controlled spin during flight.

**Patentansprüche**

1. Selbstverzehrende Rakete mit einem einwandigen Raketengehäuse (12) zum Speichern von Brennstoff (14) und hergestellt aus einem verbrennbaren Material, einer Raketenantriebseinrichtung (24, 26, 28, 30) mit Einlaßeinrichtungen (50, 54, 56) zum Aufnehmen des Brennstoffs, wobei die Raketenantriebseinrichtung während der Verbrennung des Brennstoffs Raketenschub erzeugt und Abgasdurchlaßeinrichtungen (90) aufweist, innerhalb des Gehäuses (12) angeordneten Einrichtungen (23, 86) zum Schieben des rückwärtigen Endes des Gehäuses über die Abgasdurchlaßeinrichtungen (90) mit einer dem Brennstoffverbrauch entsprechenden Rate, und hinter den Abgasdurchlaßeinrichtungen (90) angeordneten Expansionsdüseneinrichtungen (36) zum Leiten von Abgas des Brennstoffs, dadurch gekennzeichnet, daß das einwandige Raktengehäuse (12) aus einem verhältnismäßig leichtgewichtigen nichtmetallischen und wärmeisolierenden verbrennbaren Material besteht, das infolge der in der Raketenantriebseinrichtung (24, 26, 28, 30) erzeugten Hitze in der Nähe der Abgasdurchlaßeinrichtungen (90) verbrannt wird, so daß während des Fluges der Rakete kein Teil des Gehäuses (12) hinter den Abgasdurchlaßeinrichtungen (90) verbleibt und Abgas von der Verbrennung des Gehäuses (12) durch die Expansionsdüseneinrichtungen (36) tritt und zu dem von der Rakete entwickelten Schub beiträgt.

2. Rakete nach Anspruch 1, dadurch gekennzeichnet, daß das Raketengehäuse (12) vornehmlich aus KEVLAR-Epoxy besteht.

3. Rakete nach Anspruch 1 oder 2, dadurch gekennzeichnet, daß das Material des Gehäuses (12) ein pulverisiertes Oxidationsmittel enthält, das den spezifischen Impuls steigert.

4. Rekete nach einem der vorhergehenden Ansprüche, dadurch gekennzeichnet, daß der rückwärtige Abschnitt des Gehäuses (12) ein in bezug auf die Achse des Gehäuses (12) quer ausgerichtetes domförmiges Teil (18) und mehrere zwischen einzelnen Raketenantrieben der Raketenantriebseinrichtung (24, 26, 28, 30) angeordnete Strebeneinrichtungen (32, 34, 38, 40) zum Stützen der Expansionsdüseneinrichtungen (36) an dem domförmigen Teil (18) aufweist.

5. Rakete nach Anspruch 4, gekennzeichnet durch mit den Strebeneinrichtungen (32, 34, 38, 40) verbundene Einrichtungen (42, 44) zur Durchführung der Fluglagensteuerung der Rakete im Flug.

6. Rakete nach Anspruch 4 oder 5, dadurch gekennzeichnet, daß die Raketenantriebseinrichtung (24, 26, 28, 30) Auslaßgasdüsen (62, 64, 68, 70) aufweist, die schräggestellt sind, wodurch sie bewirken, daß die Rakete während des Fluges einen gesteuerten Drall aufweist.

**Revendications**

1. Fusée autophage, comprenant une enveloppe de fusée à paroi unique (12) prévue pour emmagasiner du carburant (14) et fabriquée dans un matériau combustible, des moyens moteurs de fusée (24, 26, 28, 30) possédant des moyens d'admission (50, 54, 56) pour recevoir le combustible, les moyens moteurs de fusée engendrant, durant la combustion de combustible, une poussée de fusée et possédant des moyens formant orifices d'éjection (90), des moyens (23, 28) logés à l'intérieur de l'enveloppe (12) pour faire coulisser l'extrémité arrière de l'enveloppe sur les moyens formant orifices d'éjection (90), à une vitesse correspondant à la consommation de combustible, et des moyens formant une tuyère de détente (36) situés en arrière des moyens formant orifices d'éjection (90), pour diriger l'échappement du combustible, caractérisée en ce que l'enveloppe de fusée à paroi unique (12) est constituée par un matériau combustible relativement léger, non métallique et thermiquement isolant, qui est brûlé au voisinage des moyens formant orifices d'éjection (90) par suite du dégagement de chaleur dans les moyens moteurs de fusée (24, 26, 28, 30), de telle sorte que, durant le vol de la furée, il ne subsiste en arrière des moyens formant orifices d'éjection (90) aucune partie de l'enveloppe (12), et que les produits issus de la combustion de l'enveloppe (12) passent au travers des moyens formant tuyère de détente (36) et contribuent à la pousée développée par la fusée.

2. Fusée selon la revendication 1, caractérisée en ce que l'enveloppe de fusée (12) est constituée principalement par du KEVLAR-époxy.

3. Fusée selon la revendication 1 ou 2, caractérisée en ce que le matériau constitutif de l'enveloppe (12) inclut un oxydant pulvérulent qui augmente l'impulsion spécifique.

4. Fusée selon l'une quelconque des revendications précédentes, caractérisée en ce que la partie arrière de l'enveloppe (12) comporte un élément en forme de dôme (18), orienté transversalement par rapport à l'axe de l'enveloppe (12), et une pluralité de moyens formant entretoises (32, 34, 38, 40) disposés entre des moteurs de fusée individuels appartenant aux moyens moteurs de fusée (24, 26, 28, 30), pour retenir les moyens formant une tuyère de détente (36) sur l'élément en forme de dôme (18).

5. Fusée selon la revendication 4, caractérisée par des moyens (42, 44) rattachés aux moyens formant entretoises (32, 34, 38, 40), pour assurer un contrôle d'attitude de la fusée au cours de son vol.

6. Fusée selon la revendication 4 ou 5, caractérisée en ce que les moyens moteurs de fusée (24, 26, 28, 30) possédant des tuyères d'éjection des gaz (62, 64, 68, 70) qui sont orientées obliquement, pour provoquer une rotation contrôlée de la fusée sur elle-même, lors de son vol.

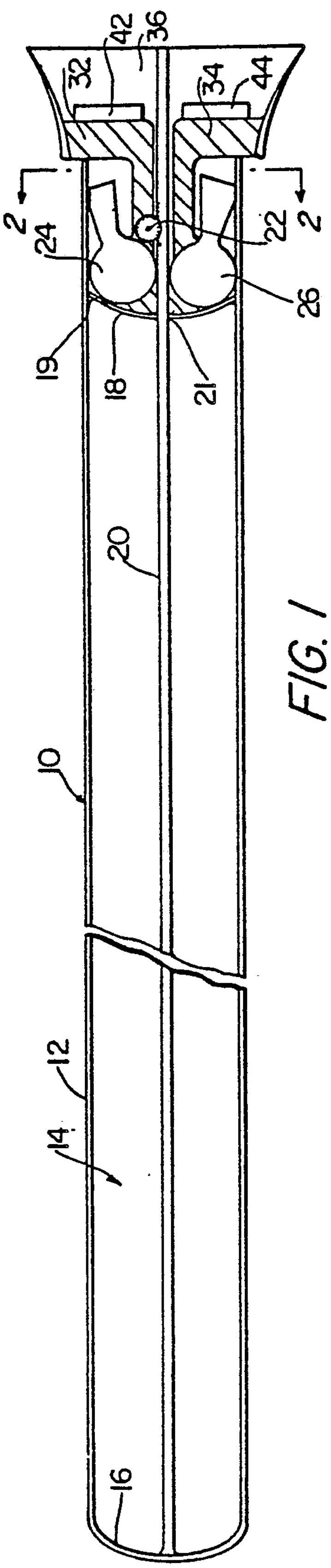

FIG. 1

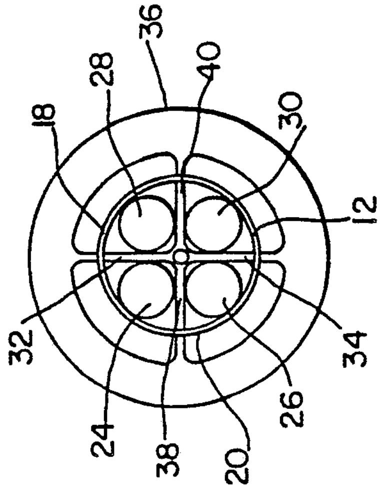

FIG. 2

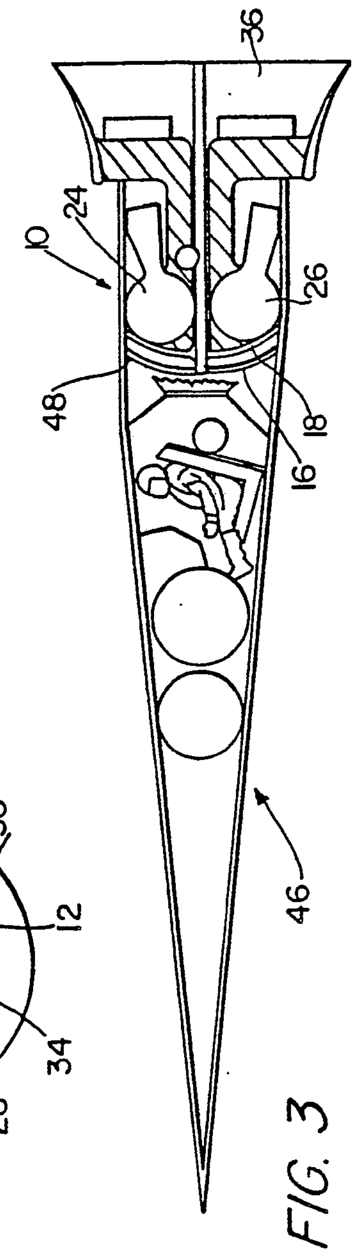

FIG. 3

FIG. 4

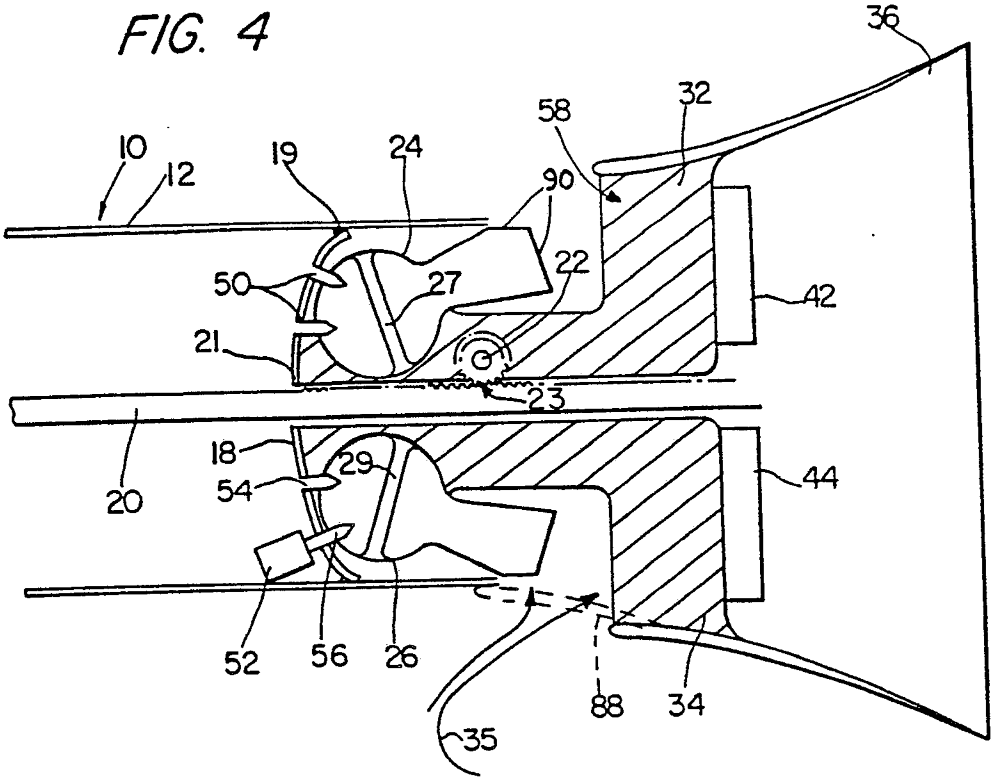

36
32
58
10
12
19
24
90
22
50
27
42
21
23
20
18
29
54
44
52
56
26
35
88
34


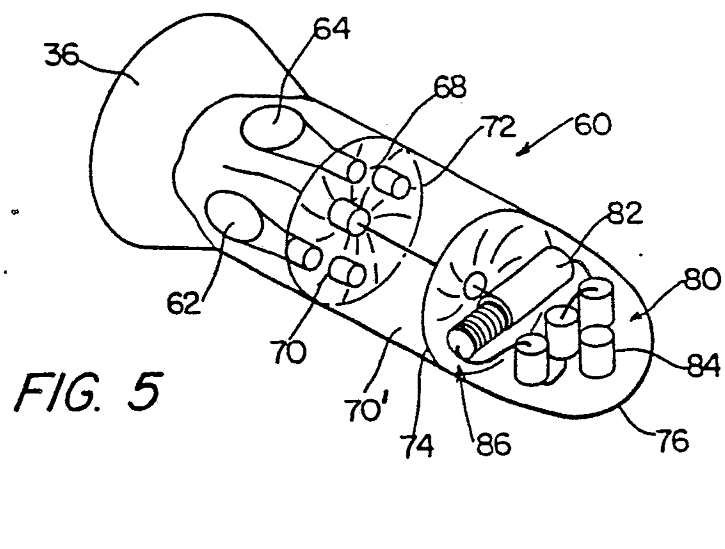

36
64
68
72
60
82
80
62
84
70
70'
74
86
76


FIG. 5

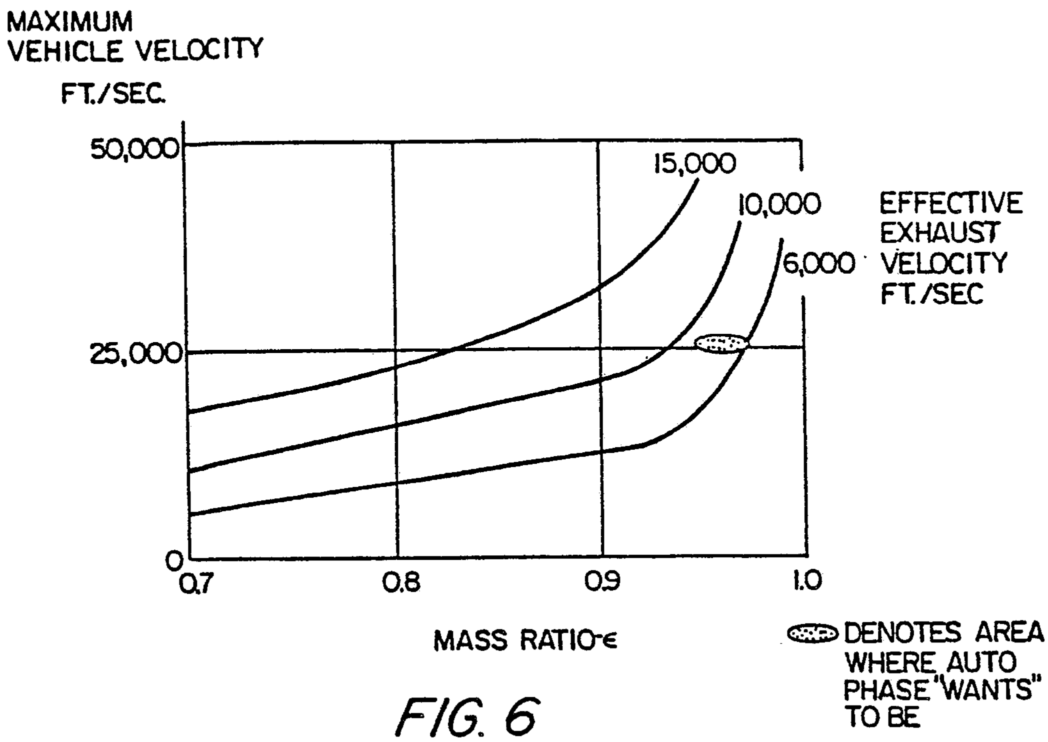
MAXIMUM
VEHICLE VELOCITY
FT./SEC.
50,000
25,000
0
0.7
0.8
0.9
1.0
15,000
10,000
6,000
EFFECTIVE
EXHAUST
VELOCITY
FT./SEC
MASS RATIO-ϵ
DENOTES AREA
WHERE AUTO
PHASE "WANTS"
TO BE

FIG. 6

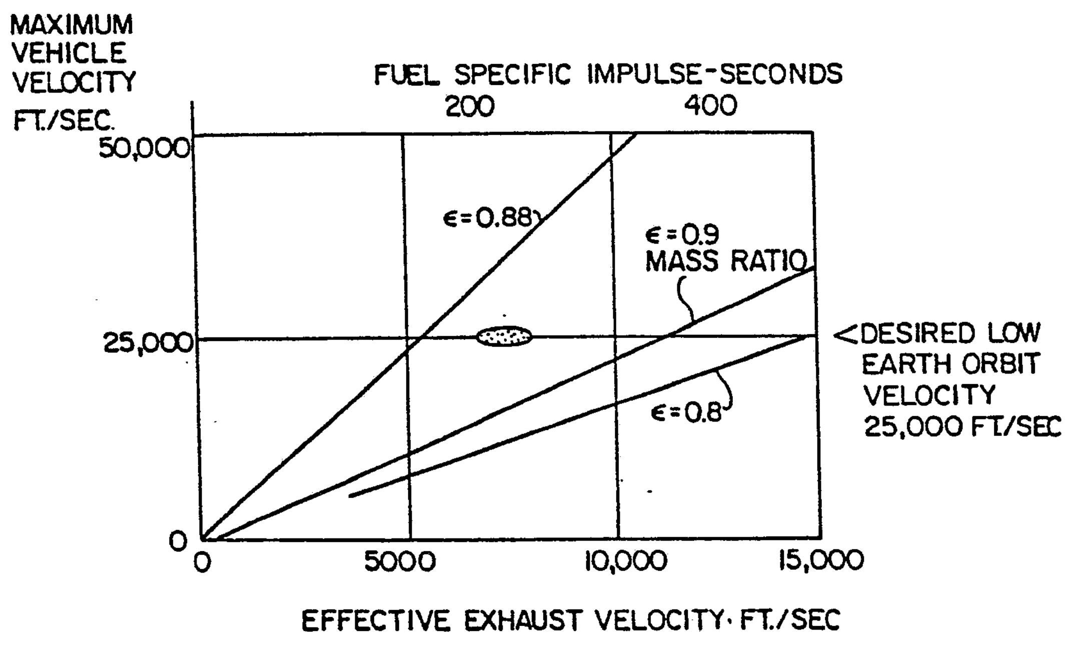
MAXIMUM
VEHICLE
VELOCITY
FT./SEC.
FUEL SPECIFIC IMPULSE-SECONDS
200
400
50,000
25,000
0
ϵ=0.88
ϵ=0.9
MASS RATIO
ϵ=0.8
<DESIRED LOW
EARTH ORBIT
VELOCITY
25,000 FT/SEC
0
5000
10,000
15,000
EFFECTIVE EXHAUST VELOCITY· FT./SEC

FIG. 7